# EUROPEAN PATENT APPLICATION

(11) **EP 4 628 706 A1**
(43) Date of publication of application: **08.10.2025**
(21) Application number: 25168930.3
(22) Date of filing: 07.04.2025
(51) Int. Cl.: F01D 17/14, F02C 7/042, F02K 3/075, F01D 5/14

(54) **ASSEMBLIES FOR AIRCRAFT PROPULSION SYSTEMS**

(30) Priority: 05.04.2024 US 202418628301
(71) Applicant: RTX Corporation, Farmington, CT 06032 (US)
(72) Inventor: KUPRATIS, Daniel B., Farmington, 06032 (US); MILLER, Michael D., Farmington, 06032 (US)
(74) Representative: Dehns

(57) **Abstract**

An assembly is provided for an aircraft propulsion system. This assembly includes a flowpath wall (98) and an actuation system (146). The flowpath wall (98) includes an inflatable bladder (104) with a deformable face skin (106) and an interior volume (110). The deformable face skin (106) includes an exterior surface that forms a peripheral boundary of a flowpath (76) along the flowpath wall (98). The interior volume (110) extends within the inflatable bladder (104) to the deformable face skin (106). The actuation system (146) includes an air system (116) and an actuator (132). The air system (116) is fluidly coupled to the interior volume (110). The air system (116) is configured to inflate or deflate the inflatable bladder (104) to change a geometry of the exterior surface. The actuator (132) is disposed in the interior volume (110). The actuator (132) is configured to mechanically apply a force to the deformable face skin (106) to further change the geometry of the exterior surface.

## Description

### BACKGROUND OF THE DISCLOSURE

### 1. Technical Field

This disclosure relates generally to an aircraft propulsion system and, more particularly, to flowpath geometry within the aircraft propulsion system.

### 2. Background Information

A turbofan engine for an aircraft propulsion system includes various flowpaths with fixed peripheral boundaries. The geometries of the fixed peripheral boundaries may be selected to provide a compromise in engine performance between various operating modes. While these known known turbofan engine arrangements have various benefits, there is still room in the art for improvement.

### SUMMARY OF THE DISCLOSURE

According to an aspect of the present disclosure, an assembly is provided for an aircraft propulsion system. This assembly includes a flowpath wall and an actuation system. The flowpath wall includes an inflatable bladder with a deformable face skin and an interior volume. The deformable face skin includes an exterior surface that forms a peripheral boundary of a flowpath along the flowpath wall. The interior volume extends within the inflatable bladder to the deformable face skin. The actuation system includes an air system and an actuator. The air system is fluidly coupled to the interior volume. The air system is configured to inflate or deflate the inflatable bladder to change a geometry of the exterior surface. The actuator is disposed in the interior volume. The actuator is configured to mechanically apply a force to the deformable face skin to further change the geometry of the exterior surface.

According to another aspect of the present disclosure, another assembly is provided for an aircraft propulsion system. This assembly includes a flowpath wall and an actuation system. The flowpath wall includes an inflatable bladder with a deformable face skin and an interior volume. The deformable face skin includes an exterior surface that forms a peripheral boundary of a flowpath along the flowpath wall. The interior volume extends within the inflatable bladder to the deformable face skin. The actuation system includes an air system and a solenoid. The air system is fluidly coupled to the interior volume. The air system is configured to regulate air pressure within the interior volume to deform the deformable face skin and change a geometry of the exterior surface. The solenoid is disposed in the interior volume. The solenoid is configured to push or pull the deformable face skin to further deform the deformable face skin and change the geometry of the exterior surface.

According to still another aspect of the present disclosure, another assembly is provided for an aircraft propulsion system. This assembly includes a flowpath wall and an actuation system. The flowpath wall includes an inflatable bladder with a deformable face skin and an interior volume. The deformable face skin includes an exterior surface that forms a peripheral boundary of a flowpath along the flowpath wall. The interior volume extends within the inflatable bladder to the deformable face skin. The actuation system includes an air system and a spring element. The air system is fluidly coupled to the interior volume. The air system is configured to regulate air pressure within the interior volume to deform the deformable face skin and change a geometry of the exterior surface. The spring element is disposed in the interior volume. The spring element is configured to push or pull the deformable face skin to further deform the deformable face skin and change the geometry of the exterior surface.

The following optional features may be applied to any of the above aspects.

The inflatable bladder may also include a rigid backing. The interior volume may extend within the inflatable bladder between the deformable face skin and the rigid backing. The actuator may be configured to mechanically apply the force to the deformable face skin to push the deformable face skin away from the rigid backing.

The inflatable bladder may also include a rigid backing. The interior volume may extend within the inflatable bladder between the deformable face skin and the rigid backing. The actuator may be configured to mechanically apply the force to the deformable face skin to pull the deformable face skin towards the rigid backing.

The actuator may be configured as or otherwise include a spring element.

The actuator may be configured as or otherwise include a solenoid actuator.

The actuator may also include spring element.

The actuator may include an actuation element and a support between the actuation element and the deformable face skin. The deformable face skin may lay against the support.

The assembly may also include a propulsor rotor rotatable about an axis. The flowpath wall may be radially next to and circumscribe the propulsor rotor. The inflatable bladder may be arranged upstream of the propulsor rotor.

The assembly may also include a propulsor rotor and an engine core. The engine core may be configured to drive rotation of the propulsor rotor about an axis. The engine core may include a compressor section, a combustor section and a turbine section. The flowpath may extend from an inlet into the engine core, through the compressor section, the combustor section and the turbine section, to an exhaust out from the engine core.

The inflatable bladder may be annular.

The inflatable bladder may be arcuate.

The inflatable bladder may be a first inflatable bladder. The deformable face skin may be a first deformable face skin. The interior volume may be a first interior volume. The exterior surface may be a first exterior surface. The flowpath wall may also include a second inflatable bladder with a second deformable face skin and a second interior volume. The second deformable face skin may include a second exterior surface that further forms the peripheral boundary of the flowpath along the flowpath wall. The second interior volume may extend within the second inflatable bladder to the second deformable face skin. The air system may be fluidly coupled to the second interior volume. The air system may be configured to inflate or deflate the second inflatable bladder to change a geometry of the second exterior surface.

The flowpath may extend axially along and circumferentially around an axis. The first inflatable bladder may be circumferentially next to the second inflatable bladder.

The air system may include an air source and a manifold which fluidly couples the air source to the first interior volume and the second interior volume in parallel.

The flowpath may extend axially along and circumferentially around an axis. The first inflatable bladder may be axially next to the second inflatable bladder.

The air system may be configured to independently inflate or deflate the first inflatable bladder and the second inflatable bladder.

When viewed in a reference plane parallel with the axis and during a mode of operation, the actuation system may be configured to provide: the first exterior surface with a concave geometry; and the second exterior surface with a convex geometry.

The flowpath wall may be an inner flowpath wall. The inflatable bladder may be an inner inflatable bladder. The deformable face skin may be an inner deformable face skin. The interior volume may be an inner interior volume. The exterior surface may be an inner exterior surface. The peripheral boundary may be an inner peripheral boundary. The assembly may also include an outer flowpath wall. The outer flowpath wall may include an outer inflatable bladder with an outer deformable face skin and an outer interior volume. The outer deformable face skin may include an outer exterior surface that forms an outer peripheral boundary of the flowpath along the outer flowpath wall. The outer interior volume may extend within the outer inflatable bladder to the outer deformable face skin. The air system may be fluidly coupled to the outer interior volume. The air system may be configured to inflate or deflate the outer inflatable bladder to change a geometry of the outer exterior surface.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial schematic illustration of a powerplant for an aircraft propulsion system.
FIG. 2 is a schematic illustration of a portion of the powerplant at an intersection between flowpaths.
FIGS. 3A-C are schematic illustrations of a portion of the powerplant with an inflatable bladder in various arrangements.
FIGS. 4A and 4B are schematic illustrations of various inflatable bladder configurations.
FIGS. 5A and 5B are schematic illustrations of a portion of the powerplant between compressor sections with multiple arrays of inflatable bladders in various arrangements.
FIG. 6 is a schematic cross-sectional illustration of an upstream portion of the powerplant of FIGS. 5A and 5B.
FIG. 7 is a schematic cross-sectional illustration of a downstream portion of the powerplant of FIGS. 5A and 5B.

### DETAILED DESCRIPTION

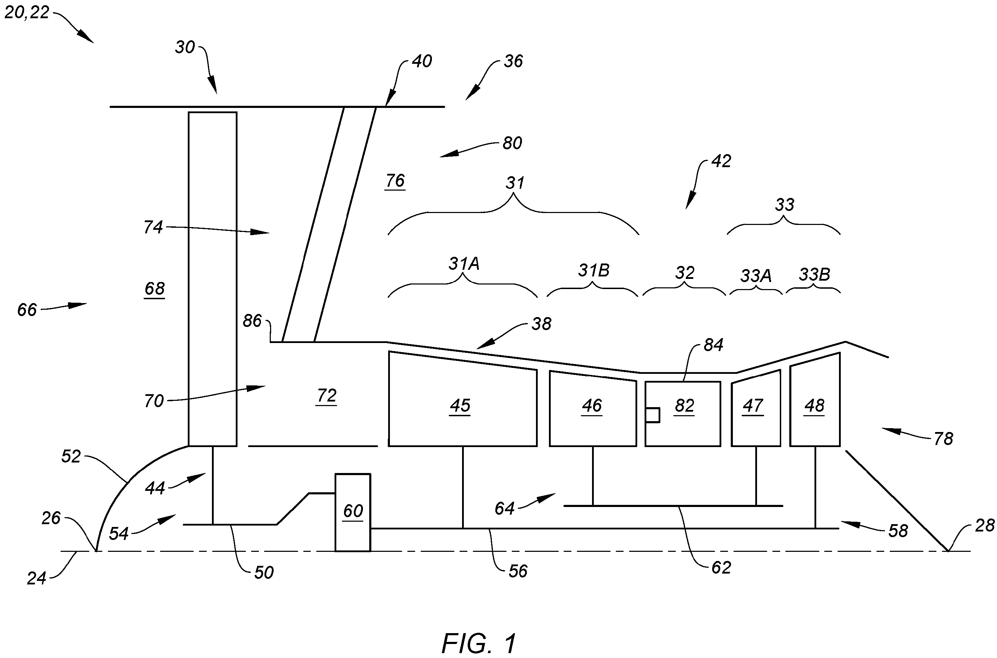

FIG. 1 illustrates a powerplant 20 of a propulsion system for an aircraft. The aircraft may be an airplane, a drone (e.g., an unmanned aerial vehicle (UAV)), or any other manned or unmanned aerial vehicle or system. For ease of description, the aircraft propulsion system is described below as a ducted rotor propulsion system such as a turbofan propulsion system, and the aircraft powerplant 20 is described below as a gas turbine engine 22 such as a turbofan engine. The present disclosure, however, is not limited to such exemplary aircraft propulsion system and/or aircraft powerplant configurations.

The turbine engine 22 extends axially along an axis 24 between a forward, upstream end 26 of the turbine engine 22 and an aft, downstream end 28 of the turbine engine 22. Briefly, the axis 24 may be a centerline axis of the turbine engine 22 and/or one or more of its members. The axis 24 may also or alternatively be a rotational axis for one or more members of the turbine engine 22. The turbine engine 22 of FIG. 1 includes a propulsor section 30 (e.g., a fan section), a compressor section 31, a combustor section 32 and a turbine section 33. The compressor section 31 includes a low pressure compressor (LPC) section 31A and a high pressure compressor (HPC) section 31B. The turbine section 33 includes a high pressure turbine (HPT) section 33A and a low pressure turbine (LPT) section 33B.

The engine sections 30-33B may be arranged sequentially along the axis 24 within an engine housing 36. This engine housing 36 includes an inner housing structure 38 (e.g., a core case structure) and an outer housing structure 40 (e.g., a propulsor case structure). The inner housing structure 38 may house one or more of the engine sections 31A-33B; e.g., a core 42 of the turbine engine 22. The outer housing structure 40 may house at least the propulsor section 30.

The propulsor section 30 includes a bladed propulsor rotor 44; e.g., a fan rotor. The LPC section 31A includes a bladed low pressure compressor (LPC) rotor 45. The HPC section 31B includes a bladed high pressure compressor (HPC) rotor 46. The HPT section 33A includes a bladed high pressure turbine (HPT) rotor 47. The LPT section 33B includes a bladed low pressure turbine (LPT) rotor 48.

The propulsor rotor 44 of FIG. 1 is connected to and rotatable with a propulsor shaft 50; e.g., a fan shaft. The propulsor rotor 44 of FIG. 1 is also connected to and rotatable with a nose cone 52. At least (or only) the propulsor rotor 44, the propulsor shaft 50 and the nose cone 52 collectively form a propulsor rotating assembly 54. This propulsor rotating assembly 54 of FIG. 1 and its members 44, 50 and 52 are rotatable about the axis 24. Here, the nose cone 52 may be referred to as a spinner since the nose cone 52 of FIG. 1 is rotatable with the propulsor rotating assembly 54 and its propulsor rotor 44. It is contemplated, however, the nose cone 52 may alternatively be a stationary member of the turbine engine 22 where, for example, the nose cone 52 is fixed to (or part of) the inner housing structure 38 or another stationary structure of the turbine engine 22.

The LPC rotor 45 is coupled to and rotatable with the LPT rotor 48. The LPC rotor 45 of FIG. 1, for example, is connected to the LPT rotor 48 through a low speed shaft 56. At least (or only) the LPC rotor 45, the LPT rotor 48 and the low speed shaft 56 collectively form a low speed rotating assembly 58; e.g., a low speed spool of the engine core 42. This low speed rotating assembly 58 of FIG. 1 and its members 45, 48 and 56 are rotatable about the axis 24; however, it is contemplated the low speed rotating assembly 58 may alternatively be rotatable about another axis radially and/or angularly offset from the axis 24. Referring again to FIG. 1, the low speed rotating assembly 58 is also coupled to the propulsor rotating assembly 54. The low speed rotating assembly 58 of FIG. 1, for example, is connected to the propulsor rotating assembly 54 through a geartrain 60; e.g., an epicyclic gear system, a transmission, etc. With this arrangement, the low speed rotating assembly 58 and its LPT rotor 48 may rotate at a different (e.g., faster) rotational velocity than the propulsor rotating assembly 54 and its propulsor rotor 44. However, it is contemplated the propulsor rotor 44 may alternatively be coupled to the low speed rotating assembly 58 and its LPT rotor 48 without the geartrain 60 such that the LPT rotor 48 may directly drive rotation of the propulsor rotor 44 through a shaft (e.g., the low speed shaft 56) or a shaft assembly.

The HPC rotor 46 is coupled to and rotatable with the HPT rotor 47. The HPC rotor 46 of FIG. 1, for example, is connected to the HPT rotor 47 through a high speed shaft 62. At least (or only) the HPC rotor 46, the HPT rotor 47 and the high speed shaft 62 collectively form a high speed rotating assembly 64; e.g., a high speed spool of the engine core 42. This high speed rotating assembly 64 of FIG. 1 and its members 46, 47 and 62 are rotatable about the axis 24; however, it is contemplated the high speed rotating assembly 64 may alternatively be rotatable about another axis radially and/or angularly offset from the axis 24.

During operation, air enters the turbine engine 22 through an airflow inlet 66. This air is directed from the airflow inlet 66 and propelled by the propulsor rotor 44 through a propulsor flowpath 68 to an inlet 70 into a (e.g., annular) core flowpath 72 and an inlet 74 into a (e.g., annular) bypass flowpath 76. The propulsor flowpath 68 extends through the propulsor section 30. The core flowpath 72 of FIG. 1 extends sequentially through the LPC section 31A, the HPC section 31B, the combustor section 32, the HPT section 33A and the LPT section 33B from the core inlet 70 to a combustion products exhaust 78 out from the core flowpath 72 and the engine core 42. The air entering the core flowpath 72 from the propulsor flowpath 68 may be referred to as "core air". The bypass flowpath 76 of FIG. 1 extends through a (e.g., annular) bypass duct from the bypass inlet 74 to an airflow exhaust 80 out from the bypass flowpath 76. This bypass flowpath 76 and its bypass duct bypass (e.g., are disposed radially outboard of and extend along) the engine core 42. The air entering the bypass flowpath 76 from the propulsor flowpath 68 may be referred to as "bypass air".

The core air is compressed by the LPC rotor 45 and the HPC rotor 46 and is directed into a (e.g., annular) combustion chamber 82 of a (e.g., annular) combustor 84 in the combustor section 32. Fuel is injected into the combustion chamber 82 and mixed with the compressed core air to provide a fuel-air mixture. This fuel-air mixture is ignited and combustion products thereof flow through and sequentially drive rotation of the HPT rotor 47 and the LPT rotor 48 about the axis 24. The rotation of the HPT rotor 47 and the LPT rotor 48 respectively drive rotation of the HPC rotor 46 and the LPC rotor 45 about the axis 24 and, thus, compression of the air received from the core inlet 70. The rotation of the LPT rotor 48 also drives rotation of the propulsor rotor 44. The rotation of the propulsor rotor 44 propels the bypass air through and out of the bypass flowpath 76. The propulsion of the bypass air may account for a majority of thrust generated by the turbine engine 22, e.g., more than seventy-five percent (75%) of engine thrust. The turbine engine 22 of the present disclosure, however, is not limited to the foregoing exemplary thrust ratio.

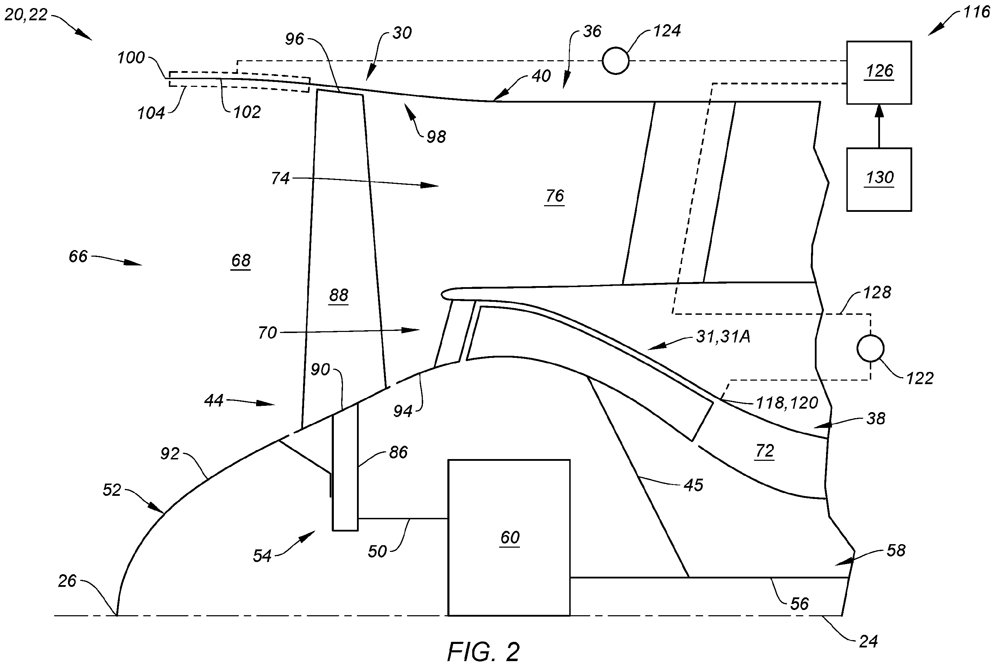

Referring to FIG. 2, the propulsor rotor 44 includes a rotor base 86 (e.g., a disk or a hub) and a plurality of propulsor rotor blades 88; e.g., fan blades. The rotor base 86 forms a radial inner platform 90 for the propulsor rotor 44. This inner platform 90 is disposed and extends axially between a radial outer wall 92 of the nose cone 52 and a radial inner flowpath wall 94 of the inner housing structure 38. The inner platform 90 along with the nose cone outer wall 92 and the inner flowpath wall 94 may thereby collectively form a radial inner peripheral boundary of the propulsor flowpath 68.

The rotor blades 88 are arranged circumferentially around the rotor base 86 and the axis 24 in an annular array; e.g., a circumferentially equispaced circular array. Each of the rotor blades 88 is connected to the rotor base 86. Each of the rotor blades 88, for example, may be formed integral with or mechanically fastened, welded, brazed and/or otherwise attached to the rotor base 86. Each of the rotor blades 88 projects spanwise out from the rotor base 86 and a radial outer surface of its inner platform 90, radially across the propulsor flowpath 68, to a radial outer distal tip 96 the respective rotor blade 88.

The rotor blades 88 and their tips 96 are shrouded by a radial outer flowpath wall 98 of the outer housing structure 40. The outer flowpath wall 98 of FIG. 2, for example, axially overlaps and circumscribes a radial outer periphery of the propulsor rotor 44 at the rotor blade tips 96. This outer flowpath wall 98 extends longitudinally (e.g., axially in FIG. 2) along the propulsor flowpath 68 to (or about) a forward, upstream end 100 of the outer housing structure 40. The outer flowpath wall 98 may thereby form a radial outer peripheral boundary of the propulsor flowpath 68 opposite the inner peripheral boundary members 90, 92 and 94. The outer flowpath wall 98 may also (or may not) extend longitudinally along at least an upstream section of the bypass flowpath 76 and form a radial outer peripheral boundary of the bypass flowpath 76.

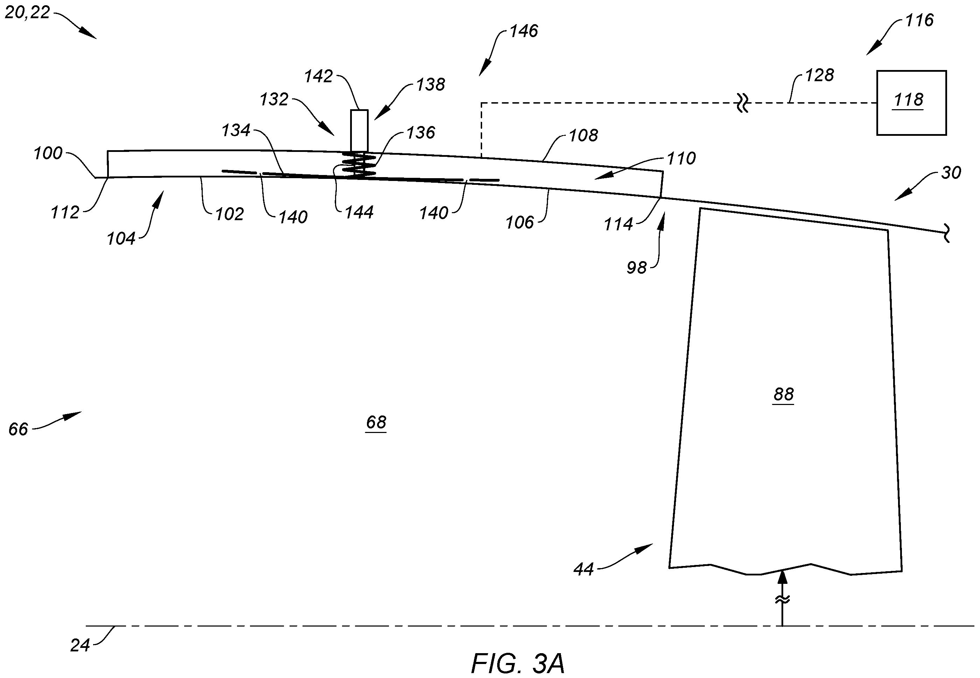

The outer flowpath wall 98 includes a deformable radial inner surface 102 (e.g., an exterior, flowpath facing surface) disposed upstream of the propulsor rotor 44. The outer flowpath wall 98 of FIG. 2, for example, is configured with an inflatable bladder 104. This inflatable bladder 104 is arranged at (e.g., on, adjacent or proximate) the airflow inlet 66. The inflatable bladder 104 of FIG. 2, for example, extends longitudinally along the propulsor flowpath 68 from (or about) a location next to and upstream of the rotor blades 88 at their rotor blade tips 96 to the forward, upstream end 100 of the outer housing structure 40. Referring to FIGS. 3A-C, the inflatable bladder 104 includes a deformable face skin 106, a rigid backing 108 (e.g., a back skin, a support structure, etc.) and an interior volume 110.

The deformable face skin 106 extends longitudinally along the propulsor flowpath 68 upstream of the propulsor rotor 44. The deformable face skin 106 extends circumferentially about (e.g., completely around) the axis 24 providing the deformable face skin 106 with a full-hoop (e.g., tubular, cylindrical, frustoconical) geometry. The deformable face skin 106 of FIGS. 3A-C may thereby form at least a longitudinal section (e.g., axial section) or an entirety of the radial inner surface 102 of the outer flowpath wall 98 upstream of the propulsor rotor 44.

The deformable face skin 106 is constructed from a deformable and resilient material; e.g., a non-metal composite material. The deformable face skin 106, for example, may include a polymer matrix and fiber reinforcement embedded within the polymer matrix. The polymer matrix may be an elastomer such as rubber. The fiber reinforcement may include one or more woven or non-woven layers of long-strand, short-strand or chopped fibers; e.g., fiberglass fibers, carbon fibers, aramid fibers (e.g., Kevlar^{®} fibers), or any combination thereof. It is contemplated, however, the deformable face skin 106 may alternatively be constructed from the polymer matrix with the fiber reinforcement to a side of the polymer matrix or even without the fiber reinforcement in select embodiments. The present disclosure, however, is not limited to such exemplary deformable face skin constructions or materials.

This rigid backing 108 extends longitudinally (e.g., axially) along the deformable face skin 106. The rigid backing 108 extends circumferentially about (e.g., completely around) the axis 24 providing the rigid backing 108 with a full-hoop (e.g., tubular, frustoconical) geometry. This rigid backing 108 may be cast, machined, additive manufactured and/or otherwise formed as a metal hoop structure. Alternatively, the rigid backing 108 may be formed from shaped sheet metal. The present disclosure, however, is not limited to such exemplary rigid backing constructions or materials. For example, the rigid backing 108 may alternatively be formed from a rigid non-metal composite material.

The rigid backing 108 may be configured as, or may otherwise include, a backing wall and/or a back frame for the inflatable bladder 104. The deformable face skin 106 of FIGS. 3A-C, for example, is connected to the rigid backing 108 at or about opposing axial ends 112 and 114 of the inflatable bladder 104 and its members 106 and 108. At these connections / the ends 112 and 114, the deformable face skin 106 is also sealed (e.g., directly or indirectly) against the rigid backing 108. The interior volume 110 is thereby formed by the deformable face skin 106 and the rigid backing 108. The interior volume 110 of FIGS. 3A-C, for example, extends radially within the inflatable bladder 104 between and to the deformable face skin 106 and the rigid backing 108. The interior volume 110 of FIGS. 3A-C extends axially within the inflatable bladder 104 between and to the connections between the deformable face skin 106 and the rigid backing 108.

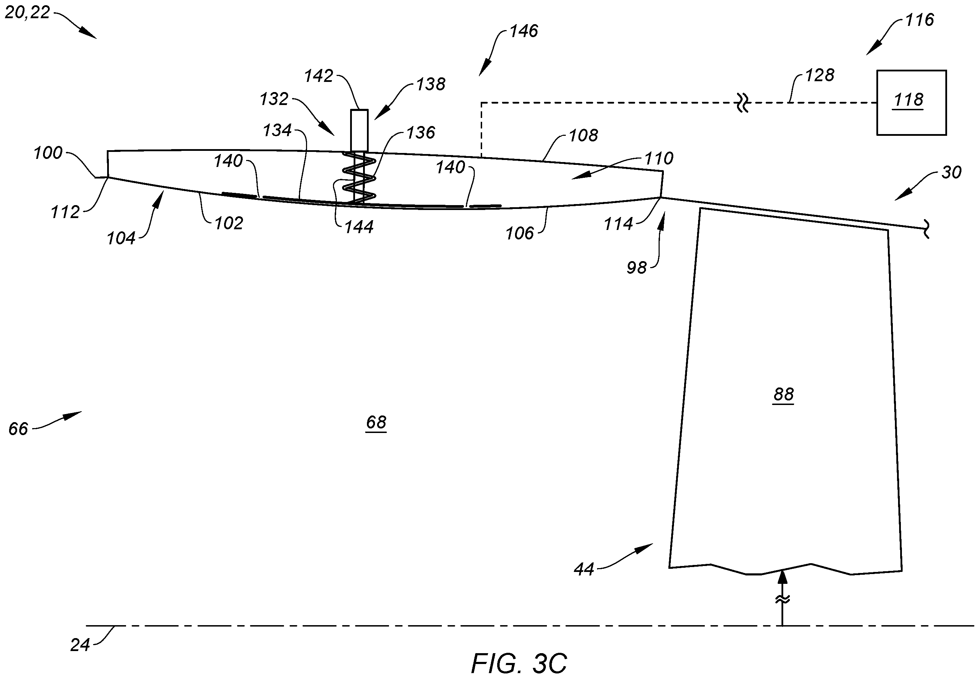

When the inflatable bladder 104 is deflated as shown in FIG. 3A, the interior volume 110 may substantially (or completely) collapse and the deformable face skin 106 may be located proximate (or in some embodiments lay against and engage) the rigid backing 108. However, when the inflatable bladder 104 is inflated as shown in FIG. 3C, the interior volume 110 grows in size and the deformable face skin 106 moves radially away from and is spaced from (e.g., at an axial center of the inflatable bladder 104) the rigid backing 108.

Referring to FIG. 2, the inflating and deflating of the inflatable bladder 104 is controlled by an air system 116 of the turbine engine 22. This air system 116 includes an air source 118 which is fluidly coupled to the interior volume 110 (see FIGS. 3A-C). The air source 118 may be configured as or otherwise include a bleed 120 from the compressor section 31; e.g., the LPC section 31A. However, it is contemplated the air source 118 may alternatively (or also) be configured as or otherwise include a standalone air compressor, a compressed air reservoir (e.g., tank) or the like. The air system 116 of FIG. 2 also includes one or more valves 122 and 124 and a control module 126 fluidly coupled inline along an air circuit 128 between the air source 118 and the inflatable bladder 104 and its interior volume 110. Here, the control module 126 is arranged between the valves 122 and 124. The upstream valve 122 is arranged between the air source 118 (e.g., the compressor bleed 120) and the control module 126. The downstream valve 124 is arranged between the control module 126 and the inflatable bladder 104. The control module 126 is configured to control operation (e.g., opening and closing) of the valves 122 and 124 based on, for example, control signal(s) received from an onboard controller 130 for the turbine engine 22; e.g., a full authority digital engine control (FADEC) or the like.

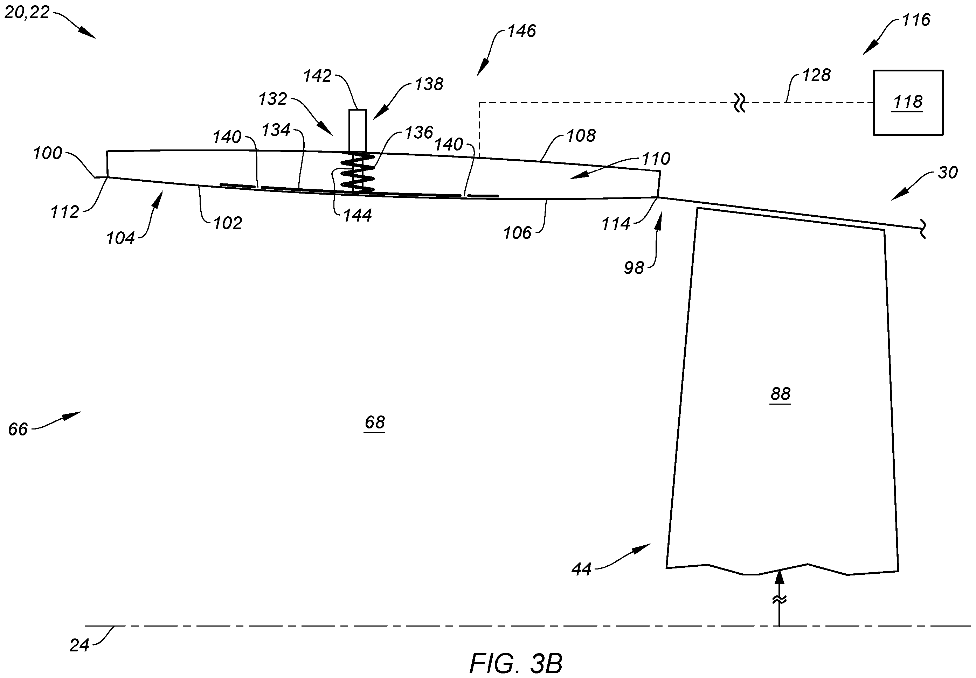

Referring to FIGS. 3A-C, the air system 116 is configured to direct air into the interior volume 110 to inflate the inflatable bladder 104; e.g., from the (e.g., fully) deflated arrangement of FIG. 3A to the partially inflated arrangement of FIG. 3B, from the partially inflated arrangement of FIG. 3B to the (e.g., fully) inflated arrangement FIG. 3C, etc. This inflation of the inflatable bladder 104 deforms the deformable face skin 106 and thereby changes a sectional geometry of the radial inner surface 102. More particularly, the inflation of the inflatable bladder 104 pushes (e.g., bulges) an axial center of the deformable face skin 106 radially inwards towards the axis 24. Referring to FIG. 3B, with the inflatable bladder 104 partially inflated, the deformable face skin 106 and the radial inner surface 102 may have a (e.g., large radius) convex geometry (or alternatively a straight-line geometry) when viewed, for example, in a reference plane parallel with (e.g., including) the axis 24. Referring to FIG. 3C, with the inflatable bladder 104 fully inflated, the deformable face skin 106 and the radial inner surface 102 may have a (e.g., small radius) convex geometry when viewed, for example, in the reference plane.

The air system 116 is also configured to direct air out of the interior volume 110 to deflate the inflatable bladder 104; e.g., from the (e.g., fully) inflated arrangement FIG. 3C to the partially inflated arrangement of FIG. 3B, from the partially inflated arrangement of FIG. 3B to the (e.g., fully) deflated arrangement of FIG. 3A, etc. This deflation of the inflatable bladder 104 deforms the deformable face skin 106 and thereby changes the sectional geometry of the radial inner surface 102. More particularly, the deflation of the inflatable bladder 104 allows the axial center of the deformable face skin 106 to move (e.g., retract) radially outwards away from the axis 24. Referring to FIG. 3B, with the inflatable bladder 104 partially inflated, the deformable face skin 106 and the radial inner surface 102 may have a (e.g., large radius) convex geometry (or alternatively a straight-line geometry) when viewed, for example, in the reference plane. Referring to FIG. 3A, with the inflatable bladder 104 (e.g., fully) deflated, the deformable face skin 106 and the radial inner surface 102 may have a concave geometry (or alternatively a straight-line geometry) when viewed, for example, in the reference plane.

While the deformable face skin 106 is described above as being deformed using air pressure within the interior volume 110 (e.g., inflating or deflating the inflatable bladder 104), the deformable face skin 106 of FIGS. 3A-C is also deformable and/or otherwise movable using one or more mechanical actuators 132 (one visible in FIGS. 3A-C). These mechanical actuators 132 are arranged circumferentially about the axis 24 in an annular array; a circumferentially equispaced circular array. Each mechanical actuator 132 includes a face skin support 134 and one or more actuation elements. One of these actuation elements may be configured as a passive actuation element such as, but not limited to, a spring element 136; e.g., a coil spring. Another one of the actuation elements may be configured as an active actuation element such as, but not limited to, a solenoid actuator 138.

The face skin support 134 may be configured as a backing plate or other support structure for the deformable face skin 106. This face skin support 134 is radially engageable with an interior surface of the deformable face skin 106. The deformable face skin 106 of FIGS. 3A-C, for example, may contact and lay against the face skin support 134. However, the face skin support 134 may be perforated to facilitate airflow across the face skin support 134 to the interior surface of the deformable face skin 106. The face skin support 134 of FIGS. 3A-C, for example, includes one or more perforations 140, where each perforation 140 extends across the face skin support 134. The face skin support 134 of the present disclosure, however, is not limited to such a perforated arrangement and may alternatively be non-perforated in select embodiments.

The deformable face skin 106 may be detached from the face skin support 134. The face skin support 134 may thereby be operable to push the deformable face skin 106 away from the rigid backing 108. However, where the inflatable bladder 104 is (e.g., fully) inflated and the face skin support 134 is moved towards the rigid backing 108, an air gap may be formed between the face skin support 134 and the interior surface of the deformable face skin 106. Alternatively, the face skin support 134 may be attached to at least a portion or an entirety of the deformable face skin 106 that the face skin support 134 engages. The face skin support 134 may thereby be operable to push the deformable face skin 106 away from the rigid backing 108 as well as to pull the deformable face skin 106 towards the rigid backing 108.

The spring element 136 is disposed in the interior volume 110. The spring element 136 of FIGS. 3A-C, for example, is arranged radially between the deformable face skin 106 and the rigid backing 108. More particularly, the spring element 136 extends between the face skin support 134 and the rigid backing 108. The spring element 136 may also be connected to the face skin support 134 and the rigid backing 108 at opposing ends of the spring element 136. For ease of description, the spring element 136 is described below as a compression spring element. The spring element 136 of FIGS. 3A-C, for example, is configured to bias the face skin support 134 away from the rigid backing 108; e.g., even when the inflatable bladder 104 is partially inflated as shown in FIG. 3B and/or fully inflated as shown in FIG. 3C. The spring element 136 is thereby configured to push the deformable face skin 106 away from the rigid backing 108 through the face skin support 134. In other embodiments, however, the spring element 136 may alternatively be a tension spring element. The spring element 136, for example, may alternatively be configured to bias the face skin support 134 towards the rigid backing 108; e.g., even when the inflatable bladder 104 is partially deflated as shown in FIG. 3B and/or fully deflated as shown in FIG. 3A.

The solenoid actuator 138 of FIGS. 3A-C includes a solenoid motor 142 and a solenoid strut 144; e.g., an actuator rod. The solenoid motor 142 may be disposed outside of the inflatable bladder 104. The solenoid motor 142 of FIGS. 3A-C, for example, is mounted to an exterior of the rigid backing 108. The solenoid strut 144, however, projects out from the solenoid motor 142 and into the inflatable bladder 104 and its interior volume 110. The solenoid strut 144 of FIGS. 3A-C, for example, projects radially across the interior volume 110 out from the rigid backing 108 to the face skin support 134; e.g., through a bore of the spring element 136. The solenoid strut 144 may also be connected to the face skin support 134. With this arrangement, the solenoid actuator 138 may be configured to push the face skin support 134 away from the rigid backing 108 to deform the deformable face skin 106 in an outward direction. The solenoid actuator 138 may also or alternatively be configured to pull the face skin support 134 towards the rigid backing 108 to deform (or facilitate deformation of) the deformable face skin 106 in an inward direction.

The air system 116 and the mechanical actuators 132 of FIGS. 3A-C collectively form an actuation system 146 for the deformable face skin 106. This actuation system 146 may selectively deform and/or otherwise move the deformable face skin 106 using the air system 116 and/or the mechanical actuators 132 during turbine engine operation to tune performance of the propulsor section 30. For example, the actuation system 146 may deform and/or otherwise move the deformable face skin 106 to the arrangement of FIG. 3C when the propulsor rotor 44 has a relatively slow rotor blade tip speed or a relatively high rotor blade tip speed. When the propulsor rotor 44 has the relatively slow rotor blade tip speed, the deformable face skin arrangement of FIG. 3C may facilitate a lower inlet relative Mach number, a lower aero loading on the propulsor rotor 44, and/or an increase in propulsor section efficiency. When the propulsor rotor 44 has the relatively high rotor blade tip speed, the deformable face skin arrangement of FIG. 3C may facilitate a higher inlet relative Mach number, a higher aero loading of the propulsor rotor 44, and/or a decrease in propulsor section efficiency. By contrast, the actuation system 146 may deform and/or otherwise move the deformable face skin 106 to the arrangement of FIG. 3B when the propulsor rotor 44 has a moderate rotor blade tip speed. When the propulsor rotor 44 has the moderate rotor blade tip speed, the deformable face skin arrangement of FIG. 3B may facilitate a lower inlet relative Mach number, a lower aero loading of the propulsor rotor 44, and/or an increase in propulsor section efficiency.

To configure the deformable face skin 106 into the arrangement of FIG. 3A, the air system 116 may deflate the inflatable bladder 104. The solenoid actuators 138 may also pull the face skin support 134 towards the rigid backing 108 to overcome the bias force of the spring elements 136 and/or pull the deformable face skin 106 towards the rigid backing 108. To configure the deformable face skin 106 into the arrangement of FIG. 3B, the air system 116 may partially inflate the inflatable bladder 104, the spring elements 136 may bias the face skin support 134 away from the rigid backing 108 and/or the solenoid actuators 138 may be depowered or moved to an intermediate position. To configure the deformable face skin 106 into the arrangement of FIG. 3C, the air system 116 may fully inflate the inflatable bladder 104, the spring elements 136 may bias the face skin support 134 away from the rigid backing 108 and/or the solenoid actuators 138 may be depowered or moved to an extended position. Of course, various other combinations of utilizing the air system 116 and the mechanical actuators 132 are possible and contemplated by the present disclosure. For example, the air system 116 may be used for large adjustments of the deformable face skin 106, whereas the solenoid actuators 138 may be used for fine-tuned adjustments of the deformable face skin 106, or vice versa.

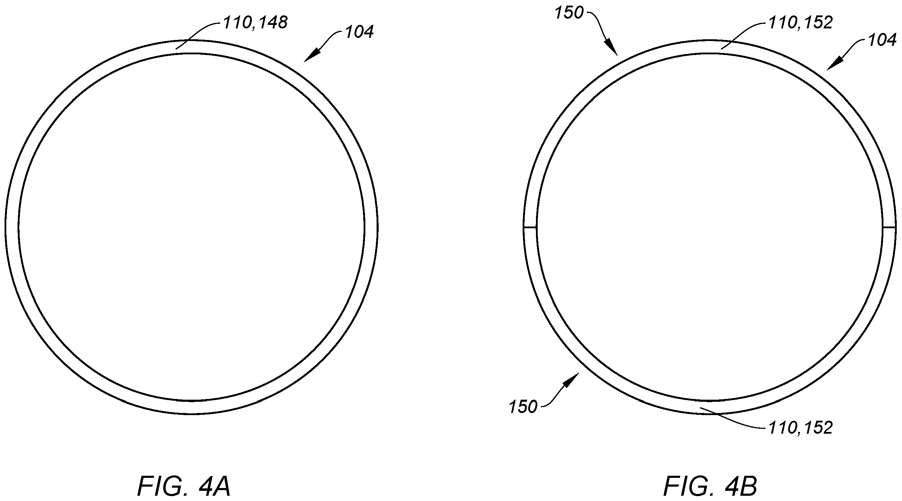

In some embodiments, referring to FIG. 4A, the inflatable bladder 104 may be configured with an annular interior volume 148 (e.g., 110). In other embodiments, referring to FIG. 4B, the inflatable bladder 104 may be configured into one or more circumferential sections 150; e.g., arcuate sections. Each circumferential section 150 may be associated with a fluidly discrete interior volume 152 (e.g., 110). With such an arrangement, the inflation / the deflation of the inflatable bladder 104 may be individually adjusted relative to circumferential position.

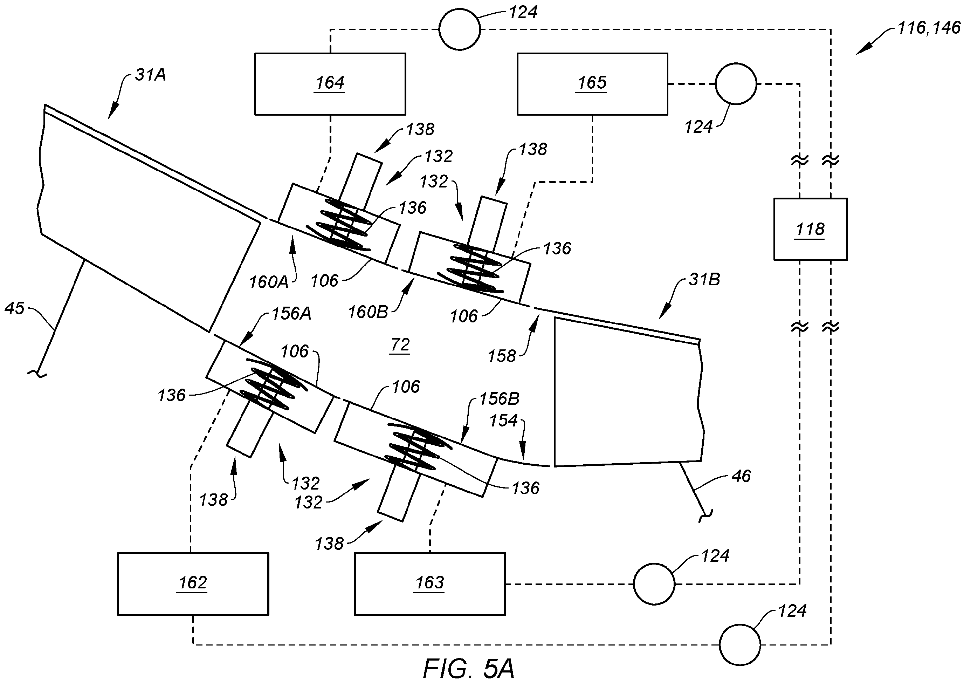

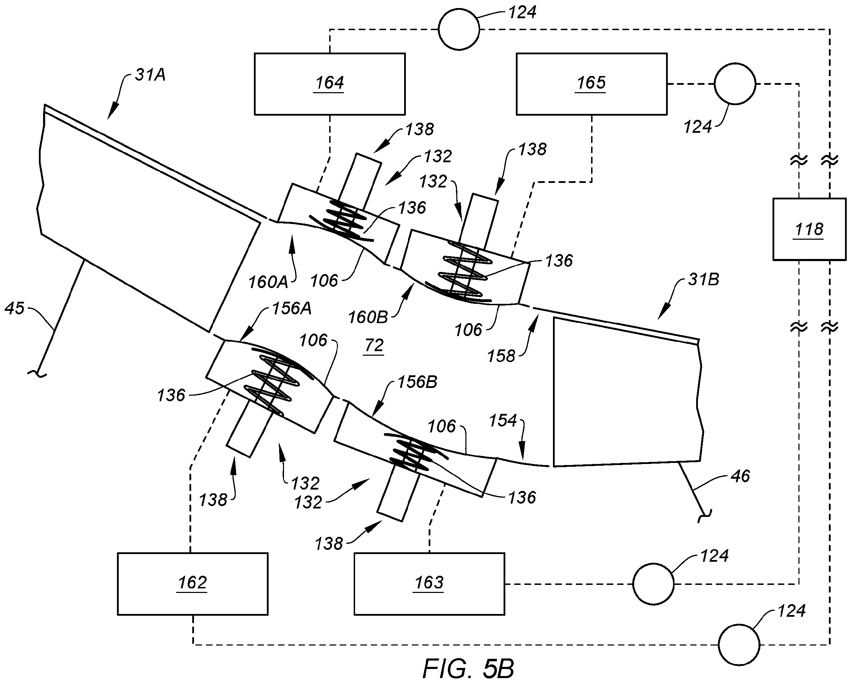

Referring FIGS. 5A and 5B, a radial inner flowpath wall 154 along the core flowpath 72 ("core flowpath inner wall") may be configured with one or more (e.g., arcuate) inner inflatable bladders 156A and 156B (generally referred to as "156"). A radial outer flowpath wall 158 along the core flowpath 72 ("core flowpath outer wall") may also or alternatively be configured with one or more (e.g., arcuate) outer inflatable bladders 160A and 160B (generally referred to as "160"). These inflatable bladders 156A, 156B, 160A and 160B may be configured similar to the inflatable bladder 104 as described above with respect to FIGS. 3A-C. The deformable face skin 106 of each inflatable bladder 156A, 156B, 160A, 160B of FIGS. 5A and 5B may also be deformed and/or otherwise moved using an air system 116 and/or one or more mechanical actuators 132 as described above with respect to FIGS. 2-3C.

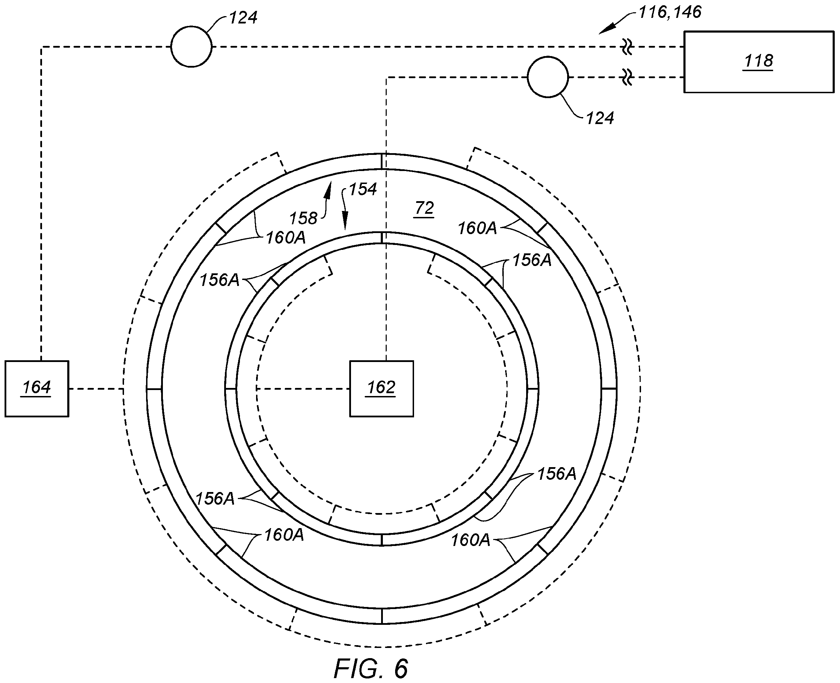

Referring to FIG. 6, the upstream, inner inflatable bladders 156A are arranged circumferentially about the axis 24 (see FIG. 2) in an annular array; e.g., a circumferentially equispaced circular array. The upstream, outer inflatable bladders 160A are similarly arranged circumferentially about the axis 24 (see FIG. 2) in an annular array; e.g., a circumferentially equispaced circular array. This array of the upstream, outer inflatable bladders 160A is disposed radially outboard of, longitudinally overlaps and circumscribes the array of the upstream, inner inflatable bladders 156A.

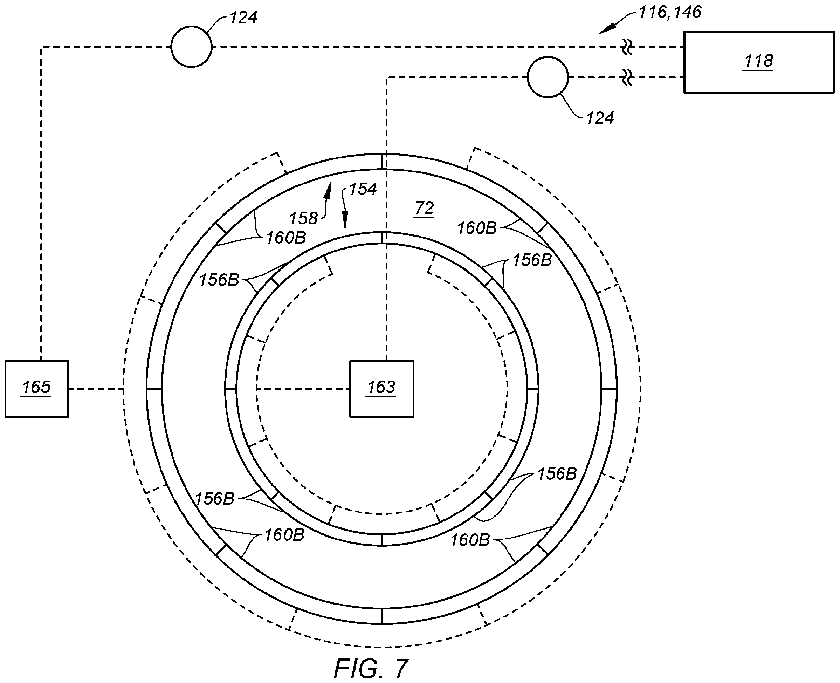

Referring to FIG. 7, the downstream, inner inflatable bladders 156B are arranged circumferentially about the axis 24 (see FIG. 2) in an annular array; e.g., a circumferentially equispaced circular array. The downstream, outer inflatable bladders 160B are similarly arranged circumferentially about the axis 24 (see FIG. 2) in an annular array; e.g., a circumferentially equispaced circular array. This array of the downstream, outer inflatable bladders 160B is disposed radially outboard of, longitudinally overlaps and circumscribes the array of the downstream, inner inflatable bladders 156B.

Referring to FIGS. 5A and 5B, each upstream, inner inflatable bladder 156A is upstream of and may be longitudinally next to a respective one of the downstream, inner inflatable bladders 156B along the core flowpath 72. Each upstream, outer inflatable bladder 160A is upstream of and may be longitudinally next to a respective one of the downstream, outer inflatable bladders 160B along the core flowpath 72. These inflatable bladder arrays of FIGS. 5A and 5B are located along the core flowpath 72 between the LPC section 31A and the HPC section 31B. The core flowpath inner wall 154 and its inner inflatable bladders 156 may thereby partially or completely form an inner transition duct wall between the LPC section 31A and the HPC section 31B. Similarly, the core flowpath outer wall 158 and its outer inflatable bladders 160 may partially or completely form an outer transition duct wall between the LPC section 31A and the HPC section 31B. By selectively deforming and/or otherwise moving the deformable outer surfaces of the inflatable bladders 156, 160, the actuation system 146 may influence flow through the core flowpath 72 from the LPC section 31A to the HPC section 31B. For example, referring to FIG. 5A, each of the inflatable bladders 156, 160 may be partially inflated to provide a relatively straight transition from the LPC section 31A to the HPC section 31B. In another example, referring to FIG. 5B, the upstream, inner inflatable bladders 156A and the downstream, outer inflatable bladders 160B may be (e.g., fully) inflated, and the downstream, inner inflatable bladders 156B and the upstream, outer inflatable bladders 160A may be (e.g., fully) deflated to provide a relatively curved transition from the LPC section 31A to the HPC section 31B. Here, when viewed in a reference plane parallel with (e.g., including) the axis 24, each inflatable bladder 156B, 160A has a concave geometry and each inflatable bladder 156A, 160B has a convex geometry.

In some embodiments, referring to FIGS. 6 and 7, each set of the inflatable bladders 156A, 156B, 160A, 160B may be fluidly coupled to the air source 118 through a respective manifold 162-165. Each set of the inflatable bladders 156A, 156B, 160A, 160B may also be fluidly coupled to the respective manifold 162-165 in parallel. The air system 116 may thereby selectively control air flow into / out of each manifold 162-165 to control the inflation / deflation of all the inflatable bladders 156A, 156B, 160A, 160B in a corresponding set. However, the air system 116 may be configured to independently control air flow into / out of the various manifolds 162-165. The air system 116 may thereby independently control the inflation / deflation of each set of the inflatable bladders 156A, 156B, 160A, 160B.

While each mechanical actuator 132 is described above as including both the spring element 136 and the solenoid actuator 138, the present disclosure is not limited to such an exemplary arrangement. For example, in other embodiments, one or more of the mechanical actuators 132 may be configured without its spring element 136 or without its solenoid actuator 138. Moreover, while each of the deformable face skins 106 is described above with one or more of the mechanical actuators 132, it is contemplated one or more of these deformable face skins 106 may be configured without any mechanical actuators 132 and deformed and/or otherwise moved using the air system 116 alone.

The inflatable bladders 104, 156A, 156B, 160A, 160B and the actuation system 146 may be included in various turbine engines other than the one described above. The inflatable bladders 104, 156A, 156B, 160A, 160B and the actuation system 146, for example, may be included in a turbine engine configured with a single spool, with two spools (e.g., see FIG. 1), or with more than two spools. The turbine engine may be configured as a turbofan engine, a turbojet engine with multiple flowpaths or any other type of turbine engine or other aircraft powerplant which would benefit from an adjustable split line.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An assembly for an aircraft propulsion system, comprising:
a flowpath wall (98; 154) comprising an inflatable bladder (104; 156A) with a deformable face skin (106) and an interior volume (110), the deformable face skin (106) comprising an exterior surface that forms a peripheral boundary of a flowpath (68; 72) along the flowpath wall (98; 154), and the interior volume (110) extending within the inflatable bladder (104) to the deformable face skin (106); and
an actuation system (146) including an air system (116) and an actuator (132);
the air system (116) fluidly coupled to the interior volume (110), and the air system (116) configured to inflate or deflate the inflatable bladder (104) to change a geometry of the exterior surface; and
the actuator (132) disposed in the interior volume (110), and the actuator (132) configured to mechanically apply a force to the deformable face skin (106) to further change the geometry of the exterior surface.

2. The assembly of claim 1, wherein:
the inflatable bladder (104; 156A) further includes a rigid backing (108);
the interior volume (110) extends within the inflatable bladder (104; 156A) between the deformable face skin (106) and the rigid backing (108); and
the actuator (132) is configured to mechanically apply the force to the deformable face skin (106) to push the deformable face skin (106) away from the rigid backing (108).

3. The assembly of claim 1 or 2, wherein:
the inflatable bladder (104; 156A) further includes a rigid backing (108);
the interior volume (110) extends within the inflatable bladder (104; 156A) between the deformable face skin (106) and the rigid backing (108); and
the actuator (132) is configured to mechanically apply the force to the deformable face skin (106) to pull the deformable face skin (106) towards the rigid backing (108).

4. The assembly of claim 1, 2 or 3, wherein:
the actuator (132) comprises a spring element (136); and/or
the actuator (132) comprises a solenoid actuator (138).

5. The assembly of any preceding claim, wherein:
the actuator (132) includes an actuation element and a support between the actuation element and the deformable face skin (106); and
the deformable face skin (106) lays against the support.

6. The assembly of any preceding claim, further comprising:
a propulsor rotor (44) rotatable about an axis (24);
the flowpath wall (98) radially next to and circumscribing the propulsor rotor (44); and
the inflatable bladder (104) arranged upstream of the propulsor rotor (44).

7. The assembly of any of claims 1 to 5, further comprising:
a propulsor rotor (44); and
an engine core (42) configured to drive rotation of the propulsor rotor (44) about an axis (24), the engine core (42) including a compressor section (31), a combustor section (32) and a turbine section (33);
the flowpath (72) extending from an inlet (70) into the engine core (42), through the compressor section (31), the combustor section (32) and the turbine section (33), to an exhaust (78) out from the engine core (42).

8. The assembly of any preceding claim, wherein:
the inflatable bladder (104; 156A) is annular; or
the inflatable bladder (104; 156A) is arcuate.

9. The assembly of any preceding claim, wherein:
the inflatable bladder (156A) is a first inflatable bladder, the deformable face skin (106) is a first deformable face skin, the interior volume (110) is a first interior volume, and the exterior surface is a first exterior surface;
the flowpath wall (154) further comprises a second inflatable bladder (156B) with a second deformable face skin (106) and a second interior volume (110), the second deformable face skin (106) comprises a second exterior surface that further forms the peripheral boundary of the flowpath (72) along the flowpath wall (154), and the second interior volume (110) extends within the second inflatable bladder (156B) to the second deformable face skin (106); and
the air system (116) is fluidly coupled to the second interior volume (110), and the air system (116) is configured to inflate or deflate the second inflatable bladder (156B) to change a geometry of the second exterior surface,
wherein, optionally:
the flowpath (72) extends axially along and circumferentially around an axis (24); and
the first inflatable bladder (156A) is circumferentially next to the second inflatable bladder (156B), or the first inflatable bladder (156A) is axially next to the second inflatable bladder (156B).

10. The assembly of claim 9, wherein the air system (116) includes an air source (118) and a manifold (162, 163) which fluidly couples the air source (118) to the first interior volume (110) and the second interior volume (110) in parallel.

11. The assembly of claim 9, wherein the air system (116) is configured to independently inflate or deflate the first inflatable bladder (156A) and the second inflatable bladder (156B).

12. The assembly of claim 9, 10 or 11, wherein, when viewed in a reference plane parallel with the axis (24) and during a mode of operation, the actuation system (146) is configured to provide
the first exterior surface with a concave geometry; and
the second exterior surface with a convex geometry.

13. The assembly of any of claims 1 to 8, wherein the flowpath wall (154) is an inner flowpath wall, the inflatable bladder (156A) is an inner inflatable bladder, the deformable face skin (106) is an inner deformable face skin, the interior volume (110) is an inner interior volume, the exterior surface is an inner exterior surface, the peripheral boundary is an inner peripheral boundary, and the assembly further comprises:
an outer flowpath wall (158) comprising an outer inflatable bladder (160A) with an outer deformable face skin (106) and an outer interior volume (110), the outer deformable face skin (106) comprising an outer exterior surface that forms an outer peripheral boundary of the flowpath (72) along the outer flowpath wall (158), and the outer interior volume (110) extending within the outer inflatable bladder (160A) to the outer deformable face skin (106); and
the air system (116) fluidly coupled to the outer interior volume (110), and the air system (116) configured to inflate or deflate the outer inflatable bladder (160A) to change a geometry of the outer exterior surface.

14. An assembly for an aircraft propulsion system, comprising:
a flowpath wall (98; 154) comprising an inflatable bladder (104; 156A) with a deformable face skin (106) and an interior volume (110), the deformable face skin (106) comprising an exterior surface that forms a peripheral boundary of a flowpath (68; 72) along the flowpath wall (98; 154), and the interior volume (110) extending within the inflatable bladder (104; 156A) to the deformable face skin (106); and
an actuation system (146) including an air system (116) and a solenoid (138);
the air system (116) fluidly coupled to the interior volume (110), and the air system (116) configured to regulate air pressure within the interior volume (110) to deform the deformable face skin (106) and change a geometry of the exterior surface; and
the solenoid (138) disposed in the interior volume (110), and the solenoid (138) configured to push or pull the deformable face skin (106) to further deform the deformable face skin (106) and change the geometry of the exterior surface.

15. An assembly for an aircraft propulsion system, comprising:
a flowpath wall (98; 154) comprising an inflatable bladder (104; 156A) with a deformable face skin (106) and an interior volume (110), the deformable face skin (106) comprising an exterior surface that forms a peripheral boundary of a flowpath (68; 72) along the flowpath wall (98; 154), and the interior volume (110) extending within the inflatable bladder (104; 156A) to the deformable face skin (106); and
an actuation system (146) including an air system (116) and a spring element (136);
the air system (116) fluidly coupled to the interior volume (110), and the air system (116) configured to regulate air pressure within the interior volume (110) to deform the deformable face skin (106) and change a geometry of the exterior surface; and
the spring element (136) disposed in the interior volume (110), and the spring element (136) configured to push or pull the deformable face skin (106) to further deform the deformable face skin (106) and change the geometry of the exterior surface.
